# EUROPÄISCHE PATENTSCHRIFT

(11) **EP 1 022 600 B1**
(45) Veröffentlichungstag und Bekanntmachung des Hinweises auf die Patenterteilung: **02.10.2002**
(21) Anmeldenummer: 00100881.2
(22) Anmeldetag: 18.01.2000
(51) Int. Cl.: G02B 27/64

(54) **Stabilisierte Kamera**
Stabilized camera
Caméra stabilisée

(30) Priorität: 20.01.1999 DE 19902081
(43) Veröffentlichungstag der Anmeldung: 26.07.2000
(73) Patentinhaber: Zeiss Optronik GmbH, 73447 Oberkochen (DE)
(72) Erfinder: Teuchert, Wolf-Dieter, Dr., 89551 Königsbronn (DE)
(74) Vertreter: Müller-Rissmann, Werner Albrecht, Dr.

(56) Entgegenhaltungen:
- EP-A- 0 385 079
- WO-A-88/05996
- DE-A- 19 826 069
- US-A- 4 249 791

## Beschreibung

Die Erfindung betrifft eine stabilisierte Kamera, insbesondere eine Luftbildkamera oder Aufklärungskamera, nach dem Oberbegriff von Anspruch 1.

Eine gattungsgemäße Kamera ist aus der EP 0 302 108 B1 bekannt. Bei dieser bekannten Kamera ist der Optikträger eine stabilisierte Plattform, auf der die einen ersten Schwenkspiegel und einen zweiten Schwenkspiegel umfassende Kameraoptik angeordnet ist.

Aus der US 4,249,791 ist ein optisches Scan-System bekannt, das zwei in einem Winkel von 90° angeordnete Linsen aufweist. Die die erste Linse transmittierende Strahlung wird mittels eines bezüglich zwei Raumrichtungen stabilisierten Spiegels in Richtung der zweiten Linse reflektiert. Die die zweite Linsen transmittierende Strahlung wird mittels eines weiteren bezüglich zwei Raumrichtungen stabilisierten Spiegels um 90° umgelenkt und in Richtung eines in einem ortsfest angeordneten Gehäuse gelagerten Detektor reflektiert. Die erste und die zweite Linse sind jeweils mit den ihnen zugeordneten Umlenkspiegeln im Gehäuseabschnitten gelagert, die gegenüber dem ortsfesten Gehäuse und relativ zueinander drehbar sind.

Auch in der EP 0 385 079 A2 ist eine stabilisierte Kamera beschrieben. Diese Kamera weist ein um eine Vertikalachse und eine Horizontalachse stabilisiertes Spiegelteleskop auf, das in einem Kettenfahrzeug angeordnet werden soll.

Aus der DE 198 26 069 ist eine stabilisierte Zielvorrichtung bekannt, die einen inneren Block umfasst, der 2-fach drehbar um eine Horizontalachse und 2-fach-drehbar um eine Vertikalachse gelagert ist.

Die US 5,262,630 offenbart eine Kamera, bei der eine Spiegelanordnung zum Scannen des Bildfelds gedreht werden kann. Darüber hinaus ist diese Kamera als Einheit in unterschiedliche Richtungen ausrichtbar.

Aufgabe der Erfindung ist es, eine gattungsgemäße Kamera zur Verfügung zu stellen, welche eine verbesserte Stabilisierung und/oder erweiterte Ausrichtmöglichkeiten aufweist.

Diese Aufgabe wird durch die Merkmale in Anspruch 1 gelöst.

Die abhängigen Ansprüche sind auf besonders vorteilhafte Ausführungsformen des erfinderischen Grundgedankens gerichtet.

Im folgenden wird die Erfindung anhand von Ausführungsbeispielen im Zusammenhang mit den beigefügten Figuren erläutert.

Es zeigen:
- Figur 1: einen schematischen Axiallängsschnitt eines Ausführungsbeispiels der erfindungsgemäßen Kamera;
- Figur 2: das Ausführungsbeispiel von Figur 1 in einer Schnittansicht entsprechend der Pfeile II von Figur 1;
- Figur 3: ein weiteres Ausführungsbeispiel der erfindungsgemäßen Kamera in einer Querschnittsdarstellung;
- Figur 4: die Kamera nach Figur 3 gesehen in Richtung der Pfeile IV von Figur 3;
- Figur 5: die Kamera nach Figur 3 gesehen in Richtung der Pfeile V von Figur 3;
- Figur 6: ein drittes Ausführungsbeispiel der erfindungsgemäßen Kamera in einer Seitenansicht; und
- Figur 7: die Kamera nach Figur 6 gesehen in Richtung der Pfeile VII von Figur 6.

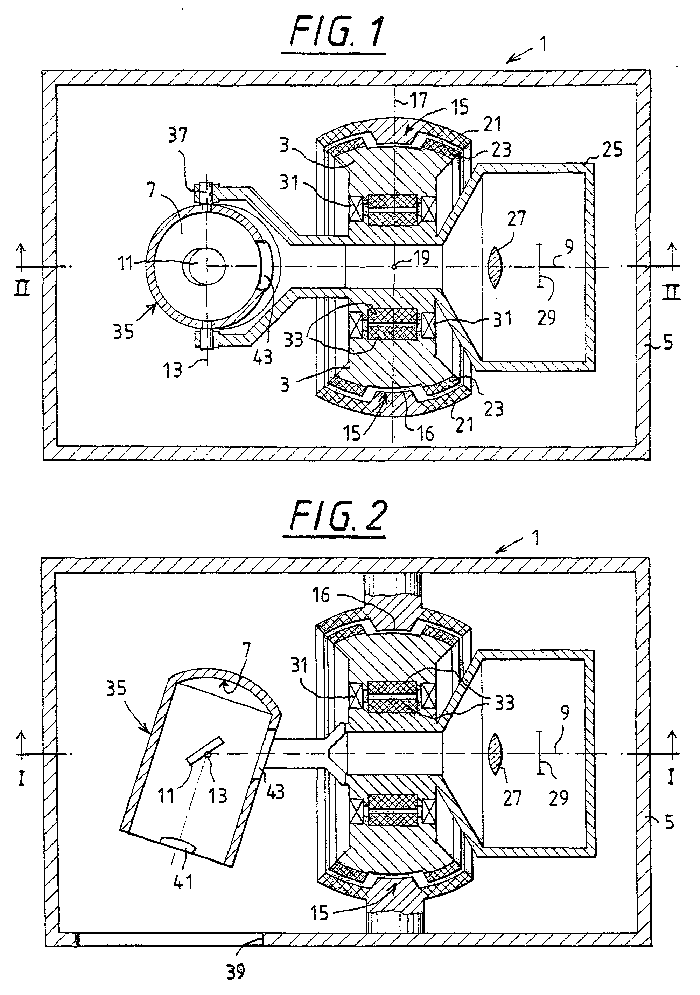

In Figur 1 ist eine erfindungsgemäße Kamera 1 schematisch im Axiallängsschnitt dargestellt. Bei einer Verwendung der Kamera 1 in einem Flugzeug, vorzugsweise zum seitlichen Ausblick von dem Flugzeug, entspräche Figur 1 einer Seitenansicht.

Die Kamera 1 umfaßt einen in einem Kameragehäuse 5 angeordneten Optikträger 3, welcher die Kameraoptik, d.h. die für die Erzeugung und Erfassung des Bilds verantwortlichen optischen Komponenten, trägt.

Die Kameraoptik umfaßt einen Schwenkspiegel 7, welcher um eine erste Schwenkachse 9 relativ zum Optikträger 3 verschwenkbar ist. Bei einer Verwendung der Kamera 1 in einem Flugzeug ist die erste Schwenkachse 9 im wesentlichen parallel zur Rollachse des Flugzeugs oder entspricht ihr.

In Figur 1 ist ein vor dem ersten Schwenkspiegel 7 angeordneter zweiter Schwenkspiegel 11 zu erkennen. Der erste Schwenkspiegel 7 und der zweite Schwenkspiegel 11 sind um eine zur ersten Schwenkachse 9 orthogonale zweite Schwenkachse 13 verschwenkbar.

Der Optikträger 3 selbst ist über ein Kugelgelenk 15 in dem Kameragehäuse 5 gelagert und deshalb relativ zum Kameragehäuse 5 in allen Richtungen drehbar. Insbesondere gewährleistet das Kugelgelenk 15 eine Drehbarkeit des Optikträgers 3 um die erste Schwenkachse 9 und um eine zur ersten Schwenkachse 9 orthogonale Achse 17. Die Lagerung des Optikträgers 3 in dem Kugelgelenk 15 ermöglicht darüber hinaus eine Drehung des Optikträgers 3 um Achsen, welche zu Rollachse, Nickachse und Gierachse des Kameraträgers, z.B. eines Luftfahrzeugs, im wesentlichen parallel sind bzw. mit diesen im wesentlichen zusammenfallen.

Mit sphärischen Torquemotoren, welche kameragehäusefeste Statorwicklungen 21 und optikträgerfeste Rotormagnete 23 umfassen, kann der Optikträger 3 im Rahmen seines konstruktionsbedingten Bewegungs- bzw. Schwenkbereichs in dem Kugelgelenk 15 ausgerichtet werden.

Da das Kugelgelenk 15 ein Luftlager 16 umfaßt, kann eine sehr reibungsarme Lagerung des Optikträgers 3 erreicht werden, wodurch eine hochwirksame Stabilisierung des Optikträgers 3 gegenüber Bewegungsschwankungen des Kameraträgers möglich wird.

In dem Optikträger 3 ist ein Innenrahmen 25 derart gelagert, daß er relativ zu dem Optikträger 3 um die erste Schwenkachse 9 drehbar ist, wobei in dem Innenrahmen 25 alle optisch wirksamen Komponenten der Kamera 1 aufgenommen sind. Von diesen sind in Figur 1 neben dem ersten Schwenkspiegel 7 und dem zweiten Schwenkspiegel 11 noch eine schematisch als Linse dargestellte Okularoptik 27 und ein Bildsensor 29 zu erkennen. Der Bildsensor 29 ist vorzugsweise ein elektrooptischer Sensor, z.B. ein CCD-Flächenarray, wobei die Kamera 1 auch einen Bildsensor für sichtbares Licht und einen weiteren Bildsensor für infrarotes Licht umfassen kann.

Der Innenrahmen 25 ist hantelförmig und in seinem zentralen Abschnitt über ein Drehlager 31 um die erste Schwenkachse 9 drehbar im Optikträger 3 gelagert. Mittels einer Antriebbaugruppe 33 kann der Innenrahmen 25 um die erste Schwenkachse 9 gedreht werden.

In dem kameraeingangsseitigen vorderen Hantelbereich ist ein Spiegelobjektiv 35 über ein eine nicht dargestellte Antriebsbaugruppe aufweisendes Drehgelenk 37 derart angeordnet, daß das Spiegelobjektiv 35 um die zweite Schwenkachse 13 verschwenkbar ist. In dem hinteren Bereich des hantelförmigen Innenrahmens 25 sind die Okkularoptik 27 und der Bildsensor 29 untergebracht. Dabei liegt im Hinblick auf die Stabilisierung der Kamera 1 der Schwerpunkt des Innenrahmens 25 vorzugsweise in seinem zentralen Abschnitt.

Figur 2 zeigt die Kamera 1 in einem weiteren Axiallängsschnitt und entspräche bei der bevorzugten Verwendung der Kamera 1 zum seitlichen Ausblick von einem Flugzeug einer Draufsicht.

In Figur 2 ist zu erkennen, daß das Spiegelobjektiv 35 dem Cassegrain-Typ entspricht. Dabei dient als Hauptspiegel des Spiegelobjektivs 35 der erste Schwenkspiegel 7, welcher die durch ein Fenster 39 im Kameragehäuse 5 eintretende Strahlung zu einem Sekundärspiegel 41 lenkt. Vom Sekundärspiegel 41 wird der Strahlengang dann auf den als planen Umlenkspiegel ausgebildeten zweiten Schwenkspiegel 11 und von diesem durch eine seitliche Öffnung 43 im Spiegelobjektiv 35 auf die Okularoptik 27 umlenkt.

Der zwischen erstem Schwenkspiegel 7 und Sekundärspiegel 41 angeordnete zweite Schwenkspiegel 11 wird bei einer Verschwenkung des Spiegelobjektivs 35 um die zweite Schwenkachse 13 seinerseits derart um die zweite Schwenkachse 13 gedreht, daß der Strahlengang zwischen zweitem Schwenkspiegel 11 und der Okkularoptik 27 unverändert bleibt. Dazu muß bei einer Verschwenkung des Spiegelobjektivs 35 um einen Winkel α der zweite Schwenkspiegel 11 um einen Winkel α/2, d.h. mit der halben Winkelgeschwindigkeit des ersten Schwenkspiegels 7, gedreht werden.

Durch diesen Aufbau ermöglicht die erfindungsgemäße Kamera 1 eine zweistufige Stabilisierung, wobei der luftgelagerte Optikträger 3 eine erste Stabilisierungsstufe gegen Roll-, Nick- und Gierbewegungen des Kameraträgers und der Innenrahmen 25 mit den Drehgelenken 31 und 37 eine zweite Stabilisierungsstufe bildet. Alternativ können die Drehgelenke 31 und 37 des Innenrahmens 25 aber auch zum Ausrichten der Kamera 1 auf das zu erfassende Objekt dienen. Das Drehgelenk 37 ist daneben insbesondere zur Kompensation des Einflusses der (stabilen) Flugbewegung des Kameraträgers auf das Bildfeld der Kamera 1, d.h. zur sogenannten Forward Motion Compensation (FMC), geeignet. So erlaubt das im Innenrahmen 25 um die zweite Schwenkachse 13 drehbar angeordnete Spiegelobjektiv 35 Winkelbewegungen der Sichtlinie in Flugrichtung um ca. ± 30°.

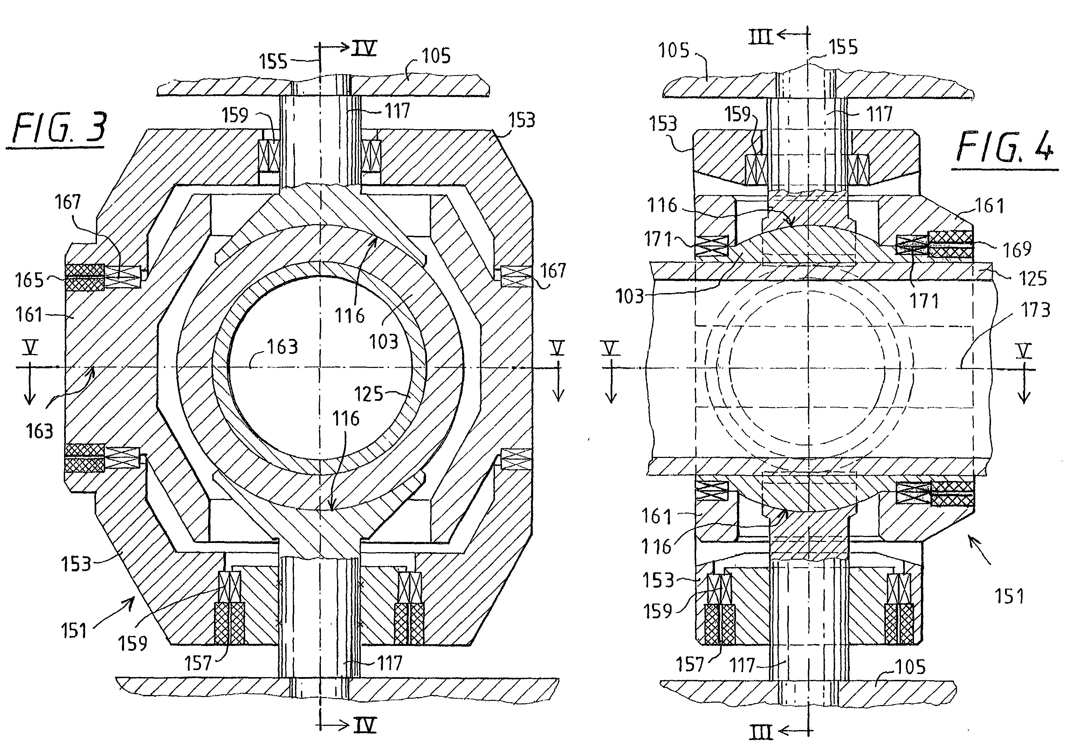

In den Figuren 3, 4 und 5 ist eine erfindungsgemäße Kamera 101 in geschnittener Vorderansicht, Seitenansicht und Draufsicht dargestellt. Die Kamera 101 unterscheidet sich von der Kamera 1 lediglich in ihrer besonders vorteilhaften Art und Weise von Lagerung und Bewegung des Optikträgers, weshalb in den Figuren 3, 4 und 5 lediglich die Lagerund Antriebsbaugruppe der Kamera 101 dargestellt ist.

Den Elementen in den Figuren 1 und 2 entsprechende Elemente der Kamera 101 tragen die gleichen Bezugszeichen wie in den Figuren 1 und 2 vermehrt um die Zahl 100. Für diese Elemente wird auf die entsprechende Beschreibung der Figuren 1 und 2 verwiesen.

Figur 3 ist ein "in Flugrichtung" gesehener Querschnitt durch die Lager- und Antriebsbaugruppe der Kamera 101 und zeigt, daß der Optikträger 103 in dem Kameragehäuse 105 von einem sphärischen Luftlager 116 gehalten wird und über einen um das sphärische Luftlager 116 herum angeordneten Kardanrahmen 151 relativ zu dem Kameragehäuse 105 ausricht- bzw. verschwenkbar ist. Dazu ist der Kardanrahmen 151 mit Motoren und Stellungsgebern ausgestattet, welche den Optikträger 103 zielgerichtet um drei Achsen ausrichten bzw. bewegen können.

In Figur 3 ist zu erkennen, daß die beiden sphärischen Lagerschalen des Luftlagers 116 über Säulenstempel 117 fest mit dem Kameragehäuse 105 verbunden sind. Der Kardanrahmen 151 umfaßt einen Gierrahmen 153, der sich um eine Gierachse 155 drehen kann. Dazu sind in den Figuren 3 bis 5 doppelt schraffierte Motor/Resolverkombinationen 157 für Drehantrieb und Drehwinkelmessung und Drehlager 159 vorgesehen, welche zwischen den Säulenstempeln 117 und dem Gierrahmen 153 angeordnet sind und sich einerseits an den Säulenstempeln 117 und andererseits an dem Gierrahmen 153 abstützen.

In dem Gierrahmen 153 ist ein Nickrahmen 161 angeordnet, welcher relativ zu dem Gierrahmen 153 um eine Nickachse 163 drehbar ist. Die Drehung um die Nickachse 163 wird durch Motor/Resolverkombinationen 165 und Drehlager 167 bewirkt bzw. ermöglicht, welche zwischen dem Gierrahmen 153 und dem Nickrahmen 161 angeordnet sind.

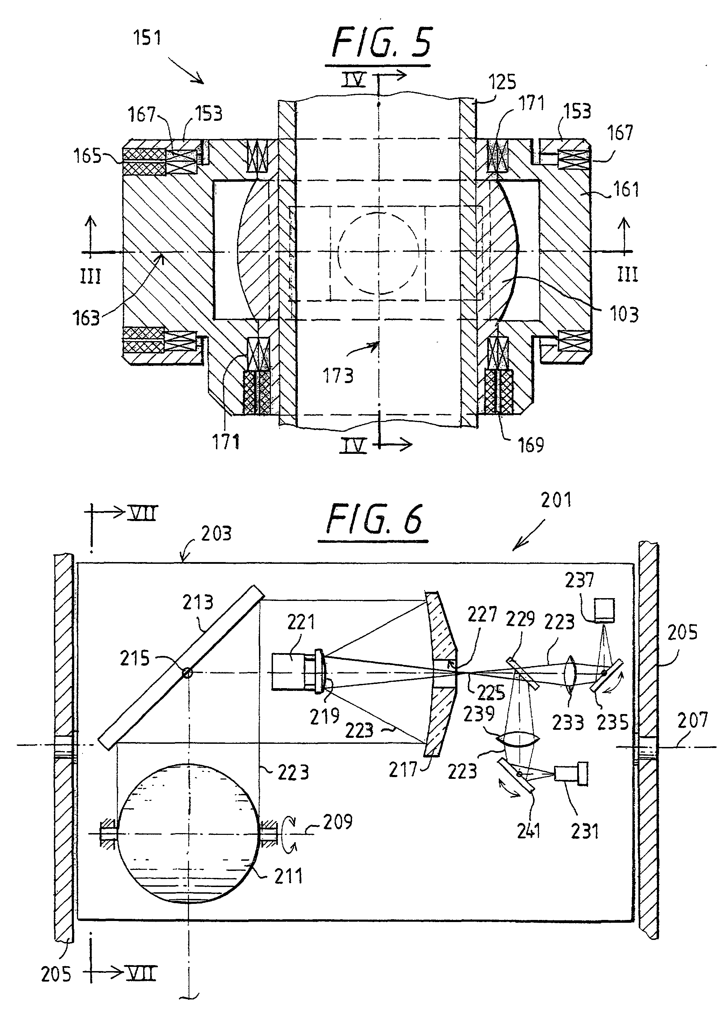

Zwischen dem Nickrahmen 161 und dem Optikträger 103 sind in den Figuren 4 und 5 zu erkennende Motor/Resolverkombinationen 169 und Drehlager 171 angeordnet, durch welche der Optikträger 103 um eine Rollachse 173 gedreht werden kann.

Der in den Figuren 1 und 2 schematisch dargestellte Drehantrieb zwischen dem Optikträger und dem Innenrahmen ist in den Figuren 3 bis 5 aus Übersichtlichkeitsgründen nicht dargestellt. Selbstverständlich kann die Kamera 101 aber auch ohne einen gegenüber dem Optikträger 103 drehbaren Innenrahmen 125 ausgeführt werden.

Während bei der Bewegung des Optikträgers 3 der Kamera 1 mittels der sphärischen Torquemotoren 21, 23 sich ungünstig auf die Kamerastabilisierung auswirkende Kreuzkopplungen der Kraftkomponenten ergeben können, ist dies bei den vom Kardanrahmen 151 der Kamera 101 getragenen Motoren ausgeschlossen.

Ferner trägt bei der Kamera 101 das Luftlager 116 die gesamte statische Last des Optikträgers 103. Die Lager und Motoren des Kardanrahmens 151 müssen also lediglich im Hinblick auf die bei Bewegungen des Optikträgers 103 auftretende Trägheit, d.h. nur auf dynamische Lasten ausgelegt werden. Für die Lager des Kardanrahmens 151 können somit herkömmliche Wälzlager oder nur geringe Stromstärken erfordernde Magnetlager verwendet werden, wodurch die Sromversorgung der Kamera 101 klein dimensioniert werden kann und durch Wirbelströme hervorgerufene Erwärmungs- und/oder EMV-Probleme weitgehend ausgeschlossen sind.

Figur 6 zeigt eine weitere erfindungsgemäße Kamera 201 im Axiallängsschnitt. Die Kamera 201 umfaßt einen Optikträger 203, der in einem Kameragehäuse 205 um eine Drehachse 207 drehbar gelagert ist.

Die Kameraoptik der Kamera 201 umfaßt eingangsseitig einen um eine erste Schwenkachse 209 schwenkbaren Schwenkspiegel 211. Die erste Schwenkachse 209 ist bei der Kamera 201 parallel und in Abstand von der Drehachse 207 angeordnet. Die erste Schwenkachse 209 könnte aber auch mit der Drehachse 207 zusammenfallen.

Dem ersten Schwenkspiegel 211 nachgeordnet ist ein zweiter Schwenkspiegel 213, der um eine zur Zeichenebene von Figur 6 orthogonale zweite Schwenkachse 215 schwenkbar ist.

Bei Verwendung der Kamera 201 in einem Luftfahrzeug werden die Drehachse 207 und die erste Schwenkachse 209 vorzugsweise in Flugrichtung angeordnet, wodurch der erste Schwenkspiegel 211 eine zur Flugrichtung seitliche Bewegung des Bildfelds ermöglicht. Der zweite Schwenkspiegel 213 ist in einem derartigen Anwendungsfall zur Bewegung des Bildfelds in Flugrichtung bzw. zur Bewegungskompensation (FMC) geeignet. Der zweite Schwenkspiegel 213 kann aber auch zur Stabilisierung der Kamera 201 gegenüber Nickbewegungen des die Kamera 201 tragenden Luftfahrzeugs oder als Richtspiegel zur Erfassung ausgewählter Objektbereiche verwendet werden.

Dem zweiten Schwenkspiegel 213 ist ein Spiegelobjektiv mit einem Hauptspiegel 217 und einem Sekundärspiegel 219 nachgeordnet. Der Sekundärspiegel 219 ist mittels einer Verstelleinheit 221 um zwei Achsen verstellbar. Dadurch kann mit dem Sekundärspiegel 219 eine Feinstabilisierung der Kamera 201 durchgeführt werden.

In Figur 6 wird mit den Linien 223 der Verlauf eines Strahlenbüschels in der Kameraoptik schematisch dargestellt. Es ist zu erkennen, daß der erste Schwenkspiegel 211 und der zweite Schwenkspiegel 213 Planspiegel sind, welche das in die Kamera 211 einfallende Strahlenbüschel 223 auf den als Parabolspiegel ausgebildeten Hauptspiegel 217 lenken. Der Hauptspiegel 217 lenkt das Strahlenbüschel 223 dann auf den Sekundärspiegel 219. Der Sekundärspiegel 219 ist konvexhyperbolisch und weist einen ersten Brennpunkt auf, welcher mit dem Brennpunkt des Hauptspiegels 217 zusammenfällt. Ein zweiter Brennpunkt 225 des Sekundärspiegels 219 liegt in der Nähe einer zentralen Bohrung 227 des Hauptspiegels 217.

Dem zweiten Brennpunkt 225 nachgeordnet liegt ein Strahlteiler 229, der für den sichtbaren Wellenlängenbereich des einfallenden Strahlenbüschels 223 durchlässig ist und den infraroten Wellenlängenbereich des einfallenden Strahlenbüschels 223 zu einem IR-Bildsensor 231 umlenkt. Der sichtbare Teile des Strahlenbüschels 223 wird über eine schematisch dargestellte Okkularoptik 233 und einen schwenkbaren Umlenkspiegel 235 zu einem elektrooptischen Bildsensor 237 umgelenkt. Zwischen dem Strahlteiler 229 und dem IR-Bildsensor 231 sind gleichfalls eine schematisch dargestellte Okkularoptik 239 und ein schwenkbarer Umlenkspiegel 241 angeordnet.

Die in ihrer Schwenkstellung steuerbaren Umlenkspiegel 235 und 241 können zum sequentiellen Abtasten des Sehfelds, d.h. zur sequentiellen Abbildung auf die entsprechenden Bildsensoren, zur Kompensation der Bewegung des Kameraträgers oder zur Kompensation der Schwenkbewegung von erstem und/oder zweitem Schwenkspiegel 211, 213 verwendet werden.

Die Bildsensoren 231, 237 können Zeilendetektoren sein, vorzugsweise sind sie aber als Flächendetektoren ausgebildet.

Die Anordnung von Umlenkspiegel 235 bzw. 241 und Bildsensor 237 bzw. 231 kann bezüglich der Lage der Umlenkspiegelschwenkachsen derart ausgestaltet sein, daß sie den seitlichen Sehfeldschwenk des ersten Schwenkspiegels 211 und/oder die Flugbewegung bzw. Schwenkbewegung des zweiten Schwenkspiegels 213 kompensieren.

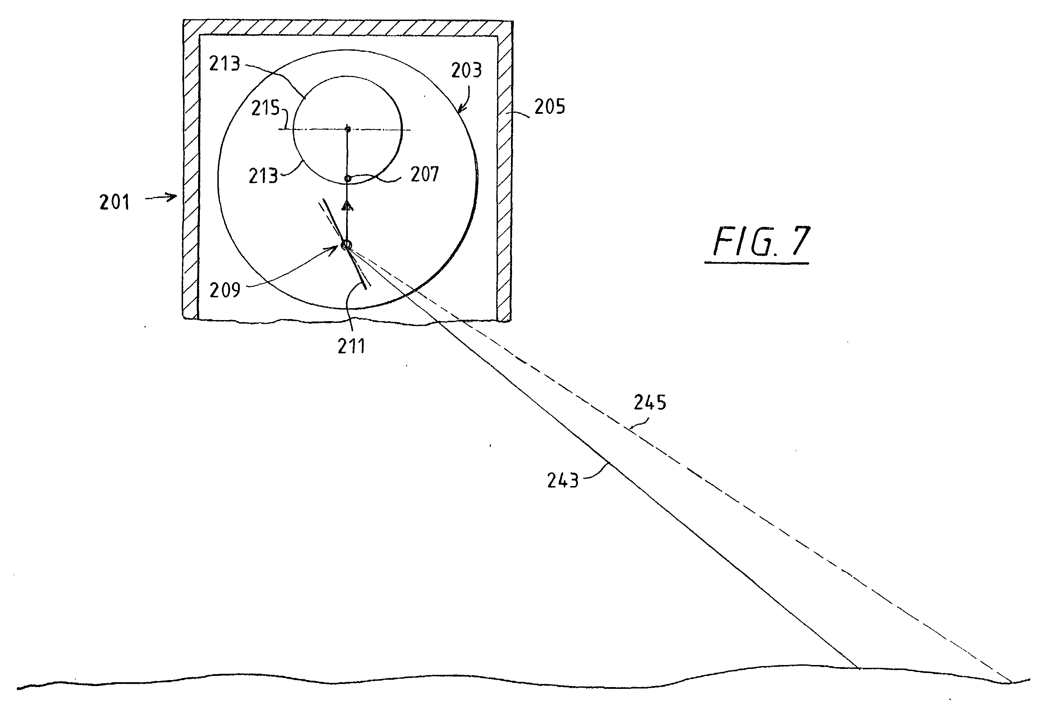

In Figur 7 ist die Kamera 201 als Luftbildkamera in Richtung der Flugbewegung eines nicht dargestellten Kameraträgers dargestellt.

Es ist zu erkennen, daß durch ein Verschwenken des ersten Schwenkspiegels 211 um die erste Schwenkachse 209 die Ausblickrichtung quer zur Flugrichtung geändert werden kann. In der durchgezogen dargestellten Stellung des ersten Schwenkspiegels 211 ist die Ausblickrichtung und das dieser zugeordnete Sehfeld durch eine durchgezogen dargestellte Sichtlinie 243 und in der gestrichelt dargestellten Stellung des ersten Schwenkspiegels 211 durch die gestrichelt dargestellte Sehlinie 245 zu erkennen.

Von dem ersten Schwenkspiegel 211 wird die Sichtlinie 243 bzw. 245 auf den zweiten Schwenkspiegel 213 umgelenkt, der um die zweite Schwenkachse 215 schwenkbar ist.

Die Stabilisierung der Kamera 201 gegenüber Schwankungen der Bewegung des Kameraträgers kann in der folgenden Weise durchgeführt werden.

Durch die Drehbarkeit des Optikträgers 203 um die Längsachse 207 kann eine Stabilisierung um die Rollachse eines die Kamera 201 tragenden Luftfahrzeugs erreicht werden. Der erste Schwenkspiegel 211 braucht dann, wenn er zum Wechsel des Sehfelds seitlich zur Flugrichtung verwendet wird, nicht zur Stabilisierung herangezogen werden. Selbstverständlich aber kann eine zweistufige Rollstabilisierung auf den ersten Schwenkspiegel 211 als zweite Stabilisierungsstufe zurückgreifen.

Der zweite Schwenkspiegel 213 kann zur Stabilisierung der Nickbewegungen des Kameraträgers mit Hilfe eines in bekannter Weise über ein 2:1 Bandgetriebe angetriebenen Kreisels verwendet werden. Eine Feinstabilisierung kann schließlich über den Sekundärspiegel 219 erreicht werden.

Die endliche Belichtungszeit der Bildsensoren kann während der Belichtungszeit der Bildsensoren eine Kompensation der durch Fluggeschwindigkeit bzw. Schwenkbewegung der Schwenkspiegel hervorgerufenen Bewegung des Sehfelds erfordern.

Bei der Aufnahme größerer Flächenbereiche bei kleinem Verhältnis von Fluggeschwindigkeit zu Flughöhe werden Bildstreifen von etwa 10 ° Breite durch schnelle seitliche Schwenks des ersten Schwenkspiegels 211 erfaßt. Die Bildbewegung wird dabei durch entsprechende Schwenkbewegung der Umlenkspiegel 235 und 241 ausgeglichen. Nach der Aufnahme eines Bildstreifens wird der Schwenkspiegel 211 schnell in seine Ausgangsstellung zurückgeschwenkt. Der zweite Schwenkspiegel 213 dient zur Nickstabilisierung und zum Aneinandersetzen der Teilbilder in Flugrichtung.

Bei der Aufnahme von Stereobildern oder Bildsequenzen übernimmt der zweite Schwenkspiegel 213 die Kompensation der Flugbewegung, damit dasselbe Gelände am Boden überdeckt werden kann.

Falls es bei größerem Verhältnis von Fluggeschwindigkeit zu Flughöhe, d.h. insbesondere bei höheren Fluggeschwindigkeiten, nicht mehr möglich sein sollte, das gesamte überflogene Gelände in der beschriebenen Weise zu erfassen, kann zum einen die Bildstreifenbreite verringert werden oder zum anderen der zweite Schwenkspiegel 213 zur Bewegungskompensation mit herangezogen werden. Im Extremfall sehr hoher Geschwindigkeiten kann sogar daran gedacht werden, auf einen Seitenschwenk mit dem ersten Schwenkspiegel 211 zu verzichten.

## Patentansprüche

1. Kamera (1; 101; 201) mit einer Kameraoptik (7, 41, 11, 27; 211, 213, 217, 219, 233, 239) und einem die Kameraoptik (7, 41, 11, 27; 211, 213, 217, 219, 233, 239) tragenden Optikträger (3; 103; 203), welcher in einem Kameragehäuse (5; 105; 205) in drei Raumrichtungen drehbar gelagert ist, wobei die Kameraoptik (7, 41, 11, 27; 211, 213, 217, 219, 233, 239) eingangsseitig einen relativ zu dem Optikträger (3; 103; 203) um eine erste Schwenkachse (9; 109; 209) schwenkbaren ersten Schwenkspiegel (7; 211) sowie einen zweiten Schwenkspiegel (11; 213) umfasst und wobei der Optikträger (3; 103; 203) relativ zu dem Kameragehäuse (5; 105; 205) um eine zur ersten Schwenkachse (9; 109; 209) parallele Drehachse (9; 109; 207) drehbar ist, **dadurch gekennzeichnet, dass** der zweite Schwenkspiegel (11; 213) um eine relativ zur ersten Schwenkachse (9; 109; 209) orthogonal verlaufende zweite Schwenkachse (13; 215) und relativ zum ersten Schwenkspiegel schwenkbar ist.

2. Kamera (1; 101) nach Anspruch 1, wobei ein die Kameraoptik tragender Innenrahmen (25; 125) relativ zu dem Optikträger (3; 103) um die erste Schwenkachse (9; 109) drehbar ist und der erste Schwenkspiegel (7) relativ zu dem Innenrahmen (25; 125) schwenkbar ist.

3. Kamera (1; 101) nach Anspruch 1 oder 2, wobei die Kameraoptik ein Spiegelobjektiv (35) vom Cassegrain-Typ umfaßt, welches den ersten Schwenkspiegel (7) als Hauptspiegel, einen Sekundärspiegel (41) und den zweiten Schwenkspiegel (13) als planen Umlenkspiegel aufweist, der den Strahlengang auf eine Okularoptik (27) umlenkt.

4. Kamera (1; 101) nach Anspruch 3, wobei der zweite Schwenkspiegel (11) einer Schwenkbewegung des ersten Schwenkspiegels (7) um die zweite Schwenkachse (13) mit der halben Winkelgeschwindigkeit folgt.

5. Kamera (1; 101) nach einem der Ansprüche 1 bis 4, wobei der Optikträger (3; 103) über ein Kugelgelenk (15) in dem Kameragehäuse (5; 105) gelagert ist.

6. Kamera (1) nach Anspruch 5, wobei das Kugelgelenk (15) ein sphärisches Luftlager (16; 116) umfaßt.

7. Kamera (1) nach Anspruch 5 oder 6, wobei dem Kugelgelenk (15) zwischen Kameragehäuse (5) und Optikträger (3) sphärische Torquemotoren (21, 23) zur Drehung des Optikträgers (3) zugeordnet sind.

8. Kamera (1) nach Anspruch 7, wobei die Torquemotoren magnetische Motoren mit kameragehäusefesten Statorwicklungen (21) und optikträgerfesten Rotormagneten (23) sind.

9. Kamera (101) nach Anspruch 6, wobei der Optikträger (103) über ein dreiachsiges Kardangelenk mit um das sphärische Luftlager (116) herum angeordnetem Kardanrahmen (151) relativ zu dem Kameragehäuse (105) verdrehbar ist.

10. Kamera (1; 101) nach einem der Ansprüche 2 - 9, wobei der Innenrahmen (25; 125) hantelförmig ist und an seinem mittigen Bereich in dem Optikträger (3; 103) gelagert ist.

11. Kamera (1; 101) nach Anspruch 10, wobei die erste Schwenkachse (9; 109), um die der Innenrahmen (25; 125) relativ zu dem Optikträger (3; 103) drehbar ist, die Längsachse des hantelförmigen Innenrahmens (25; 125) ist.

12. Kamera (201) nach Anspruch 1, wobei dem ersten Schwenkspiegel (211) und dem zweiten Schwenkspiegel (213) ein Spiegelobjektiv mit einem Hauptspiegel (217) und mit einem um zwei Achsen verstellbaren Sekundärspiegel (219) nachgeordnet ist.

13. Kamera (201) nach einem der Ansprüche 1 bis 12, wobei die Kameraoptik einen Bildsensor (231; 237) umfaßt, dem eine Okularoptik (233; 239) mit schwenkbarem Umlenkspiegel (235; 241) zugeordnet ist.

14. Kamera (1; 101; 201) nach einem der Ansprüche 1 bis 13, wobei die Kameraoptik elektrooptische Bildsensoren (231; 237) umfaßt.

15. Kamera (1; 101; 201) nach Anspruch 14, wobei die Kameraoptik einen Bildsensor (237) für sichtbares Licht und einen weiteren Bildsensor (231) für infrarotes Licht umfaßt.

16. Kamera (201) nach Anspruch 15, wobei jedem der Bildsensoren (231; 235) eine gesonderte Okularoptik (239; 233) mit schwenkbarem Umlenkspiegel (241; 235) zugeordnet ist.

## Claims

1. Camera (1; 101; 201) having a camera optics (7, 41, 11, 27; 211, 213, 217, 219, 233, 239) and an optics support (3; 103; 203) which carries the camera optics (7, 41, 11, 27; 211, 213, 217, 219, 233, 239) and is mounted rotatably in three spatial directions in a camera housing (5; 105; 205), the camera optics (7, 41, 11, 27; 211, 213, 217, 219, 233, 239) comprising on the input side a first pivoting mirror (7; 211), which can be pivoted relative to the optics support (3; 103; 203) about a first pivot axis (9; 109; 209), as well as a second pivoting mirror (11; 213), and it being possible to rotate the optics support (3; 103; 203) relative to the camera housing (5; 105; 205) about an axis of rotation (9; 109; 207) parallel to the first pivot axis (9; 109; 209), **characterized in that** the second pivoting mirror (11; 213) can be pivoted about a second pivot axis (13; 215), running orthogonal relative to the first pivot axis (9; 109; 209), and relative to the first pivoting mirror.

2. Camera (1; 101) according to Claim 1, it being possible for an inner frame (25; 125) carrying the camera optics to be rotated relative to the optics support (3; 103) about the first pivot axis (9; 109), and for the first pivoting mirror (7) to be pivoted relative to the inner frame (25; 125).

3. Camera (1; 101) according to Claim 1 or 2, the camera optics comprising a mirror lens (35) of the Cassegrain type, which has the first pivoting mirror (7) as primary mirror, a secondary mirror (41) and the second pivoting mirror (13) as flat deflecting mirror which deflects the beam path onto an eyepiece optics (27).

4. Camera (1; 101) according to Claim 3, the second pivoting mirror (11) following a pivoting movement of the first pivoting mirror (7) about the second pivot axis (13) at half the angular velocity.

5. Camera (1; 101) according to one of Claims 1 to 4, the optics support (3; 103) being mounted in the camera housing (5; 105) via a ball and socket joint (15).

6. Camera (1) according to Claim 5, the ball and socket joint (15) comprising a spherical air bearing (16; 116).

7. Camera (1) according to Claim 5 or 6, the ball and socket joint (15) between the camera housing (5) and optics support (3) being assigned spherical torque motors (21, 23) for rotating the optics support (3).

8. Camera (1) according to Claim 7, the torque motors being magnetic motors having stator windings (21) fixed to the camera housing and rotor magnets (23) fixed to the optics support.

9. Camera (101) according to Claim 6, it being possible for the optics support (103) to be rotated relative to the camera housing (105) via a cardan joint with three axes having a cardan frame (151) arranged around the spherical air bearing (116).

10. Camera (1; 101) according to one of Claims 2-9, the inner frame (25; 125) being dumbbell-shaped and being mounted in the optics support (3; 103) at its middle region.

11. Camera (1; 101) according to Claim 10, the first pivot axis (9; 109) about which the inner frame (25; 125) can be rotated relative to the optics support (3; 103) being the longitudinal axis of the dumbbell-shaped inner frame (25; 125).

12. Camera (201) according to Claim 1, there being arranged downstream of the first pivoting mirror (211) and the second pivoting mirror (213) a mirror lens having a primary mirror (217) and having a secondary mirror (219) which can be adjusted about two axes.

13. Camera (201) according to one of Claims 1 to 12, the camera optics comprising an image sensor (231; 237) which is assigned an eyepiece optics (233; 239) having a pivotable deflecting mirror (235; 241).

14. Camera (1; 101; 201) according to one of Claims 1 to 13, the camera optics comprising electrooptical image sensors (231; 237).

15. Camera (1; 101; 201) according to Claim 14, the camera optics comprising an image sensor (237) for visible light and a further image sensor (231) for infrared light.

16. Camera (201) according to Claim 15, each of the image sensors (231; 235) being assigned a separate eyepiece optics (239; 233) having a pivotable deflecting mirror (241; 235).

## Revendications

1. Caméra (1 ; 101 ; 201) munie d'une optique de caméra (7, 41, 11, 27 ; 211, 213, 217, 219, 233, 239) et un porte-optique (3 ; 103 ; 203) qui supporte l'optique de caméra (7, 41, 11, 27 ; 211, 213, 217, 219, 233, 239), lequel est logé dans un boîtier de caméra (5 ; 105 ; 205) de manière à pouvoir tourner dans trois dimensions dans l'espace, l'optique de caméra (7, 41, 11, 27 ; 211, 213, 217, 219, 233, 239) présentant à l'entrée un premier miroir orientable (7 ; 211) pouvant être orienté par rapport au porte-optique (3 ; 103 ; 203) selon un premier axe de pivotement (9 ; 109 ; 209) ainsi qu'un deuxième miroir orientable (11 ; 213) et le porte-optique (3 ; 103 ; 203) pouvant tourner par rapport au boîtier de la caméra (5 ; 105 ; 205) autour d'un axe de rotation (9 ; 109 ; 207) parallèle au premier axe de pivotement (9 ; 109 ; 209), **caractérisée en ce que** le deuxième miroir orientable (11 ; 213) peut pivoter autour d'un deuxième axe de pivotement (13 ; 215) orthogonal par rapport au premier axe de pivotement (9 ; 109 ; 209) et par rapport au premier miroir orientable.

2. Caméra (1 ; 101) selon la revendication 1, avec laquelle un cadre intérieur (25 ; 125) supportant l'optique de caméra peut tourner par rapport au porte-optique (3 ; 103) autour du premier axe de pivotement (9 ; 109) et le deuxième miroir orientable (7) peut pivoter par rapport au cadre intérieur (25 ; 125).

3. Caméra (1 ; 101) selon la revendication 1 ou 2, avec laquelle l'optique de caméra comprend un objectif à réflecteur (35) de type Cassegrain qui présente le premier miroir orientable (7) comme miroir principal, un miroir secondaire (41) et le deuxième miroir orientable (13) comme miroir de déviation plan, lequel dévie le trajet du rayon vers une optique oculaire (27).

4. Caméra (1 ; 101) selon revendication 3, avec laquelle le deuxième miroir orientable (11) suit un mouvement de pivotement du premier miroir orientable (7) autour du deuxième axe de pivotement (13) à la moitié de la vitesse.

5. Caméra (1 ; 101) selon l'une des revendications 1 à 4, avec laquelle le porte-optique (3 ; 103) est soutenu dans le boîtier de caméra (5 ; 105) par le biais d'une articulation à rotule (15).

6. Caméra (1) selon la revendication 5, avec laquelle l'articulation à rotule (15) comprend un coussinet d'air sphérique (16 ; 116).

7. Caméra (1) selon la revendication 5 ou 6, avec laquelle des moteurs couples sphériques (21, 23) sont associés à l'articulation à rotule (15) entre le boîtier de caméra (5) et le porte-optique (3) pour faire tourner le porte-optique (3).

8. Caméra (1) selon la revendication 7, avec laquelle les moteurs couples sont des moteurs magnétiques à enroulements de stator (21) fixés sur le boîtier de caméra et des aimants de rotor (23) fixés sur le porte-optique.

9. Caméra (101) selon la revendication 6, avec laquelle le porte-optique (103) peut tourner par rapport au boîtier de caméra (105) par le biais d'une articulation à cardan dont le cadre de cardan (151) est disposé autour du coussinet d'air sphérique (116).

10. Caméra (1 ; 101) selon l'une des revendications 2 à 9, avec laquelle le cadre intérieur (25 ; 125) est en forme de haltères et est supporté au niveau de sa zone centrale dans le porte-optique (3 ; 103).

11. Caméra (1 ; 101) selon la revendication 10, avec laquelle le premier axe de pivotement (9 ; 109) selon lequel le cadre intérieur (25 ; 125) peut tourner par rapport au porte-optique (3 ; 103) est l'axe longitudinal du cadre intérieur en forme de haltères (25 ; 125).

12. Caméra (201) selon la revendication 1, avec laquelle un objectif à réflecteur constitué d'un miroir principal (217) et d'un miroir secondaire (219) positionnable dans deux axes est disposé après le premier miroir orientable (211) et le deuxième miroir orientable (213).

13. Caméra (201) selon l'une des revendications 1 à 12, avec laquelle l'optique de caméra comprend un capteur d'image (231 ; 237) auquel est associé une optique oculaire (233 ; 239) à miroir de déviation orientable (235 ; 241).

14. Caméra (1 ; 101 ; 201) selon l'une des revendications 1 à 13, avec laquelle l'optique de caméra comprend des capteurs d'image électro-optiques (231 ; 237).

15. Caméra (1 ; 101 ; 201) selon la revendication 14, avec laquelle l'optique de caméra comprend un capteur d'image (237) pour la lumière visible et un autre capteur d'image (231) pour la lumière infrarouge.

16. Caméra (201) selon la revendication 15, avec laquelle une optique oculaire (239 ; 233) spécifique munie d'un miroir de déviation orientable (241 ; 235) est associée à chacun des capteurs d'image (231 ; 235).
